# EUROPÄISCHE PATENTANMELDUNG

(11) **EP 1 785 442 A2**
(43) Veröffentlichungstag der Anmeldung: **16.05.2007**
(21) Anmeldenummer: 06009909.0
(22) Anmeldetag: 13.05.2006
(51) Int. Cl.: C08G 63/183, C08G 63/78

(54) **Verfahren und Vorrichtung zur Herstellung von Polyester**

(30) Priorität: 11.11.2005 DE 102005053858
(71) Anmelder: Coperion Waeschle GmbH & Co. KG, 88250 Weingarten (DE)
(72) Erfinder: Stark, Bernhard, Dr., 88273 Fronreute (DE); Hustert, Olaf, 88250 Weingarten (DE); Dehm, Günther, 88368 Bergatreute (DE)
(74) Vertreter: Hofmann, Matthias

(57) **Zusammenfassung**

Verbessertes Verfahren und verbesserte Vorrichtung zur Herstellung von Polyester nach dem Verfahren der direkten Veresterung von Terephthalsäure und Ethylenglycol, bei dem die pulverförmige Terephthalsäure vor dem Eintrag in den Rührbehälter in einer Terephthalsäure-HeizVorrichtung vorgewärmt wird. Hierdurch kann die Produktionsleistung der Anlage erhöht werden.

## Beschreibung

Die Erfindung betrifft ein Verfahren und eine Vorrichtung zur Herstellung von Polyester nach der Direktveresterung nach den Oberbegriffen der Ansprüche 1 und 8. Bei der Direktveresterung wird Polyester durch die direkte Veresterung von Terephthalsäure mit Ethylenglycol gewonnen. In der Dissertation "Chemisches Recycling von Polyethylentherephthalat und Polymethylmetacrylat" von Guido Krause, Universität Hamburg 2003, wird beschrieben, dass die Direktveresterung heute der bevorzugte Weg der Polyesterproduktion ist.

Ein Verfahren und eine Vorrichtung der eingangs genannten Art sind in der Patentschrift US 4,110,316 beschrieben. Zur Herstellung von Polyester wird in einem Rührbehälter eine Aufschlämmung von Ethylenglycol und pulverförmiger Terephthalsäure erzeugt. Das Ehtylenglycol-Terephthalsäure-Gemisch wird zu einem Veresterungsreaktor gepumpt und hier bei Atmosphärendruck auf eine Temperatur von 280°C bis 315°C erwärmt. Die Erwärmung des Gemisches in dem Veresterungsreaktor benötigt Zeit.

Der Erfindung liegt daher die Aufgabe zugrunde, das Verfahren und die Vorrichtung der eingangs genannten Art so zu verbessern, dass der Durchsatz der Herstellungsanlage gesteigert werden kann.

Diese Aufgabe wird erfindungsgemäß, was das Verfahren betrifft, durch die Merkmale des Anspruches 1 gelöst. Der Kern der Erfindung liegt darin, die pulverförmige Terephthalsäure vor der Aufgabe in den Rührbehälter aufzuheizen. Hierdurch wird die Verweilzeit im Veresterungsreaktor reduziert und der Durchsatz der Herstelleranlage erhöht.
Anspruch 2 legt dar, dass die Terephthalsäure durch indirekte Erwärmung aufgeheizt wird. Dies ist besonders wirtschaftlich, da kein Gas zur direkten Aufheizung verwendet wird. Die Aufbereitung von Gas, insbesondere Stickstoff, wäre besonders aufwendig im Vergleich zum hier vorgeschlagenen Verfahren, da das Gas mit einem Filter gereinigt werden müsste bzw. bei Stickstoff ein Kreislaufsystem installiert werden müsste. Anspruch 3 gibt eine bevorzugte Ausführung an, die ohne bewegte Teile auskommt.
Anspruch 4 gibt besonders geeignete Aufheiztemperaturen für die Terephthalsäure an.
Anspruch 5 erlaubt ein besonders wirtschaftliches Aufheizen, da üblicherweise Dampf in Chemieanlagen sehr einfach verfügbar ist.
Anspruch 6 erlaubt den besonders wirtschaftlichen Betrieb des Verfahrens unter einer inerten Atmosphäre, die weitgehend aus Stickstoff besteht. Anspruch 7 erlaubt ein zügiges und gleichmäßiges Entleeren des Schüttgutwärmetauschers in den Rührbehälter.

Die vorstehend genannte Aufgabe wird erfindungsgemäß, was die Vorrichtung angeht, durch die Merkmale des Anspruchs 8 gelöst.

Die Vorrichtungsansprüche 9 und 10 geben besonders bevorzugte Ausfiihrungsformen des Schüttgutwärmetauschers an.

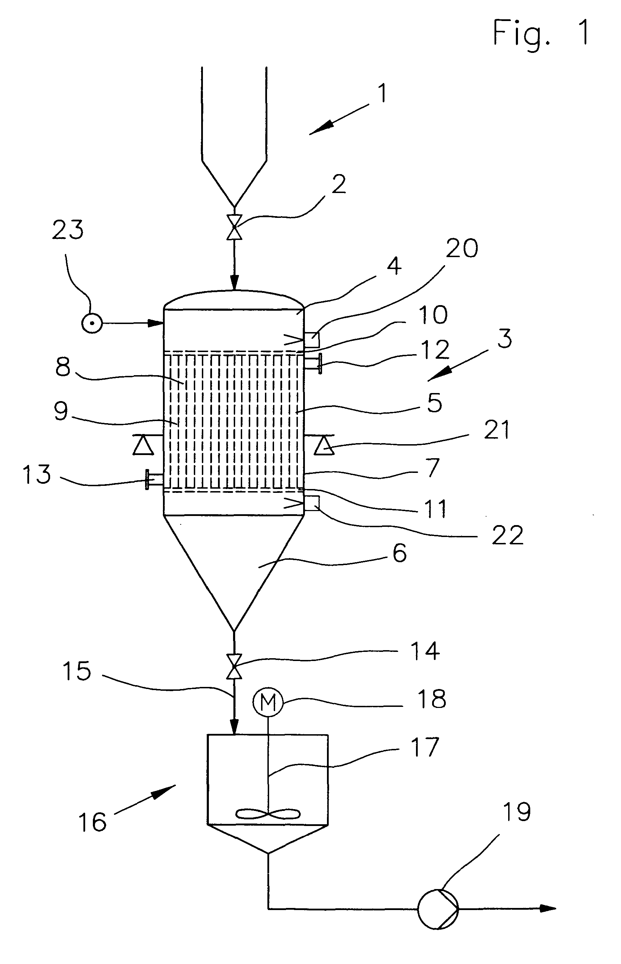

Weitere Vorteile, Merkmale und Einzelheiten der Erfindung ergeben sich aus der nachfolgenden Beschreibung eines Ausführungsbeispieles anhand der Zeichnung. Es zeigt
- Fig. 1: einen verbesserten Polyesterprozess mit einer Terephthalsäure-Heiz-Vorrichtung in schematischer Darstellung.

Die in Fig. 1 dargestellte Terephthalsäure-Heiz-Vorrichtung weist einen Vorlagebehälter 1, der mit Terephthalsäure unter Stickstoffatmosphäre gefüllt, ist auf. Über ein Zuführorgan 2, z. B. ein Kugelhahn, eine Klappe oder ein Schieber, kann der Schüttgutwärmetauscher 3 mit Terephthalsäure befüllt werden.

Der Schüttgutwärmetauscher 3 besteht aus einem oberen Puffer-Abschnitt 4, einem mittleren Wärme-Austausch-Abschnitt 5 und einem unteren Austrags-Abschnitt 6. Die Abschnitte 4, 5 und 6 weisen jeweils einen Kreisquerschnitt auf.

Der Wärme-Austausch-Abschnitt 5 weist ein Gehäuse 7 auf, in dessen Innenraum 8 parallel zueinander nur gestrichelt angedeutete Wärmetauscher-Rohre 9 jeweils mit Abstand voneinander angeordnet sind. Der Innenraum 8 ist also ein Wärmetausch-Raum, der als Rohrbündel aufgebaut ist. Die Wärmetauscher-Rohre 9 sind mit ihren oberen Enden in einem Einlauf-Rohrboden 10 und mit ihren unteren Enden in einem Auslauf-Rohrboden 11 befestigt. Der Innenraum 8 wird also durch die Rohrböden 10 bzw. 11 abgeschlossen.

Unmittelbar unterhalb des Einlauf-Rohrbodens 10 mündet in den Innenraum 8 des Gehäuses 7 des Wärme-Austausch-Abschnitts 5 ein Zuführ-Stutzen 12 für Dampf ein. Unmittelbar oberhalb des Auslauf-Rohrbodens 11 mündet ein Abführ-Stutzen 13 für das Kondensat aus dem Innenraum 8 des Gehäuses 7 aus. Im Innenraum 8 können Umlenk-Segmente zur Abstützung der Wärmetauscher-Rohre 9 jeweils quer zur Längsrichtung der Wärmetauscher-Rohre 9 im Abstand zueinander derart angebracht sein, dass der über den Zuführ-Stutzen 12 zugeführte Dampf meanderförmig durch den Innenraum 6 jeweils quer zur Längsrichtung der Wärmetauscher-Rohre 9 nach unten zum Abführ-Stutzen 13 strömt.

Der Wärme-Austausch-Abschnitt 5 kann anstatt mit Dampf auch mit einer Temperier-Flüssigkeit betrieben werden.

Bei Betrieb mit Dampf ist es zweckmäßig, den Druck und die Temperatur im Innenraum 8 konstant zu halten. Hierfür notwendige Regelarmaturen und Druckreduzierventile sind in der Fig. 1 nicht gezeigt. Ebenfalls ist der Kondensatablass, der üblicherweise am Abführstutzen 13 angeschlossen ist, in der Fig. 1 nicht gezeigt.

Im übrigen kann der Wärme-Austausch-Abschnitt 5 so ausgestaltet sein, wie er in der EP 0444 338 B1 dargestellt und beschrieben ist.

In diesem Fall besteht der Wärme-Austausch-Abschnitt 5 aus parallel zueinander angeordneten Wärmetauscherplatten, zwischen denen die Terephthalsäure steht.

Der untere Austrags-Abschnitt 6 ist in Form eines sich nach unten verjüngenden kegelförmigen Trichters ausgebildet. Über ein Abschlussorgan 14, z. B. ein Kugelhahn, eine Klappe oder ein Schieber, kann die pulverförmige Terephthalsäure über eine Fallleitung 15 in den Rührbehälter 16 abgelassen werden. In dem Rührbehälter befindet sich Ethylenglykol. Das flüssige Ethylenglykol und die pulverförmige Terephthalsäure werden mit Hilfe des Rührwerkes 17, das mit einem Motor 18 angetrieben wird, vermischt und anschließend mit einer Pumpe 19 zum Veresterungsreaktor, der in Figur 1 nicht mehr gezeigt ist, gepumpt.

Im folgenden Text ist die diskontinuierliche Betriebsweise des Schüttgutwärmetauscher 3 beschrieben. Über das Zuführorgan 2 wird der Schüttgutwärmetauscher 3 mit pulverförmiger Terephthalsäure in kurzer Zeit befüllt. Dabei ist das Abführorgan 14 geschlossen. Das Ende des Befüllvorgangs, der durch Befüllung der Wärmetauscher-Rohre 9 im Wärme-Austausch-Abschnitt 5 mit Terephthalsäure gekennzeichnet ist, kann mit Hilfe eines Füllstandsgrenzmelders 20, der sich im oberen Pufferabschnitt 4 befindet, detektiert werden. Nach dem Befüllvorgang wird das Zuführorgan 2 geschlossen.

Die in den Wärmetauscher-Rohren 9 im Wärme-Austausch-Abschnitt 5 befindliche Terephthalsäure wird dann indirekt erwärmt. Die Verweilzeit beträgt 1 bis 60 Minuten, vorzugsweise 3 bis 30 Minuten. Die Dampftemperaturen liegen im Bereich 120 bis 300°C, vorzugsweise im Bereich 140°C bis 250°C. Dann wird nach einer bestimmten Verweilzeit das Abführorgan 14 geöffnet und die erwärmte Terephthalsäure über die Fallleitung 15 in den Rührbehälter 16 abgelassen. Über Wägezellen 21 kann die Menge an Terephthalsäure, die dem Veresterungsprozess zugeführt wird, festgestellt und bilanziert werden. Über einen weiteren Füllstandsgrenzschalter 22, der im unteren Austragsabschnitt 6 in unmittelbarer Nähe des unteren Rohrbodens 11 angebracht wird, wird das Abführorgan 14 geschlossen, damit der Austragsabschnitt 6 möglichst vollständig mit bereits erhitzter Terephthalsäure gefüllt ist. Alternativ kann der Befüll- und Entleervorgang nur über die Wägezellen geregelt werden.

Während des Aufheizvorganges der Terephthalsäure, wenn also sowohl das Zuführorgan 2 als auch das Abführorgan 14 geschlossen sind, kann der Schüttgutwärmetauscher 3 über eine Stickstoffzuführleitung 23 aufgepumpt werden. Das Aufpumpen bietet den Vorteil, das der Entleervorgang des Wärme-Austausch-Abschnittes 9 mit Hilfe des Überdruckes beschleunigt werden kann. Typische Überdrücke liegen im Bereich von 0,05 bis 2 bar, vorzugsweise im Bereich 0,05 bis 1 bar. Der Überdruck entspannt sich dann beim Entleeren in den Rührbehälter 16, der ebenfalls in der Regel unter einer Stickstoffatmosphäre steht. Die Stickstoffzuführung kann auch im unteren Abschnitt 6 eingebracht werden.

Nach dem Entleervorgang des Schüttgutwärmetauschers 3 wiederholt sich der Betriebszyklus, d.h. das Zuführorgan 2 wird wieder geöffnet usw..

Statt eines diskontinuierlichen Betriebes kann der Schüttgutwärmetauscher 3 auch grundsätzlich kontinuierlich betrieben werden,
Für einen kontinuierlichen Betrieb kann das Abschlussorgan 14 z. B. auch als Zellenradschleuse oder Förderschnecke ausgebildet sein. Das Abschlussorgan 2 könnte in diesem Fall entfallen und der Schüttgutwärmetauscher 3 könnte mit dem Vorlagebehälter 1 direkt miteinander verbunden sein, d.h. der obere Einlauf-Rohrboden 10 wäre dann direkt verbunden mit dem Vorlagebehälter 1.

## Patentansprüche

1. Verfahren zum Herstellen von Polyester durch Direktveresterung von Terephthalsäure und Ethylenglykol, **dadurch gekennzeichnet, dass** die pulverförmige Terephthalsäure vor der Zugabe in einen Rührbehälter (16) aufgeheizt wird.

2. Verfahren nach Anspruch 1, **dadurch gekennzeichnet, dass** die Terephthalsäure durch indirekte Erwärmung aufgeheizt wird.

3. Verfahren nach Anspruch 1 und 2, **dadurch gekennzeichnet, dass** die indirekte Erwärmung der Terephthalsäure in einem Schüttgutwärmetauscher (3) erfolgt.

4. Verfahren nach einem der vorgenannten Ansprüche, **dadurch gekennzeichnet, dass** die Terephthalsäure von Umgebungstemperatur aufgeheizt wird auf 80 bis 250°C, vorzugsweise auf 100 bis 200°C.

5. Verfahren nach Anspruch 3 oder 4, **dadurch gekennzeichnet, dass** die Terephthalsäure im Schüttgutwärmetauscher mit Dampf indirekt aufgeheizt wird.

6. Verfahren nach einem der Ansprüche 3 bis 5, **dadurch gekennzeichnet, dass** der Schüttgutwärmetauscher mit Stickstoff inertisiert ist.

7. Verfahren nach einem der Ansprüche 3 bis 6, **dadurch gekennzeichnet, dass** der Schüttgutwärmetauscher während des Aufheizvorganges der Terephthalsäure mit Überdruck beaufschlagt wird.

8. Vorrichtung zum Herstellen von Polyester durch Direktveresterung von Terephthalsäure und Ethylenglykol, **gekennzeichnet durch**:
- einen Schüttgutwärmetauscher (3) zur Aufheizung der Terphthalsäure,
- einen Rührbehälter (16), der dem Schüttgutwärmetauscher (3) nachgeordnet ist, zum Rühren der aufgeheizten Terephtalsäure.

9. Vorrichtung nach Anspruch 8, **dadurch gekennzeichnet, dass** der Schüttgutwärmetauscher (3) mit einem oberen Pufferabschnitt (4) und einem unteren Austragsabschnitt (6) und einem zwischenliegenden Rohrbündel aufgebaut ist.

10. Vorrichtung nach Anspruch 8, **dadurch gekennzeichnet, dass** der Schüttgutwärmetauscher (3) als Plattenwärmetauscher ausgebildet ist mit mindestens zwei parallel zueinander angeordneten Platten.
